Europäisches Patentamt

European Patent Office

Office européen des brevets

(11) Veröffentlichungsnummer: **0 182 122**
**A1**

## (12) EUROPÄISCHE PATENTANMELDUNG

(21) Anmeldenummer: **85113351.2**

(22) Anmeldetag: **22.10.85**

(51) Int. Cl.⁴: **A 01 D 50/02,** A 01 D 43/08,
A 01 D 34/86

(30) Priorität: **26.10.84 DE 3439226**

(43) Veröffentlichungstag der Anmeldung: **28.05.86**
**Patentblatt 86/22**

(84) Benannte Vertragsstaaten: **AT CH GB LI NL**

(71) Anmelder: **Gerhard Dücker KG Landmaschinenfabrik,**
**D-4424 Stadtlohn-Wendfeld 9 (DE)**

(72) Erfinder: **Dücker, Gerhard, Wendfeld 9, D4424 Stadtlohn**
**(DE)**

(74) Vertreter: **Busse & Busse Patentanwälte,**
**Postfach 1226 Grosshandelsring 6, D-4500 Osnabrück**
**(DE)**

(54) **Mähgerät.**

㉗ Es handelt sich um ein Mähgerät mit einem um eine waagerechte Achse drehenden Schneidrotor, der eine Anzahl von an einer Rotorwelle (2) begrenzt vor- und rück- schwenkbar gelagerten Schlegelmessern (1) aufweist, die an der bodenseitig in Bewegungsrichtung des Geräts drehenden Rotorwelle jeweils einzeln an im Abstand und paral- lel zu deren Drehachse (3) angeordneten Gelenkbolzen (4) angebracht und mit ihren Schneidkanten (1b) parallel zur Drehachse (3) der Rotorwelle (2) ausgerichtet sind und die in ihrer Vorschwenkendstellung jeweils so begrenzt sind, daß ihre Schneidkanten (1b), bezogen auf die Drehrichtung der Rotorwelle, jeweils zurückversetzt hinter der die Drehachse der Rotorwelle mit der Mittelachse des jeweiligen Gelenkbolzens verbindenden Ebene (7) liegen. Dabei wird eine wesentlich kleinere und leichtere Bauweise dadurch erreicht, daß die Begrenzung der Vorschwenkendstellung jedes Schlegelmessers (1) durch das unmittelbare Zusammenwirken eines über den Gelenkbolzen (4) hinaus verlängerten Endes (8) des Messerschaftes (1c) mit der Rotorwelle (2) erfolgt.

0182122

- 1 -

VB/St

Mähgerät

Die Erfindung bezieht sich auf ein Mähgerät der im Oberbegriff des Patentanspruchs 1 angegebenen Art. Derartige Mähgeräte, kurz auch Schlegelmäher genannt, können - in Verbindung mit einem entsprechenden Träger- oder Zugfahrzeug - als geschobene oder gezogene Geräte mit Stützgliedern zur Bodenabstützung oder auch als Selbstfahrer ausgebildet sein; sie kommen außerdem als sog. Anbau-Arbeitsgeräte vor, d.h. sie sind als Arbeitskopf für einen an einem Fahrzeug schwenkbar angelenkten und knickbaren Auslegerarm mit hydraulischer Betätigung ausgebildet.

Es handelt sich bei den gattungsgemäßen Geräten um universell einsetzbare Mäh-, Mulch- und Zerkleinerungsgeräte, die - je nach Ausbildung und Arbeitsbreite - in der Landwirtschaft, im Obst- oder Weinbau, an Seitenstreifen von Straßen, an Wald- und Ackerrändern, auf Sport-, Freizeit-, Übungs- und Flugplätzen zur Anwendung kommen können. Sie zerkleinern mühelos und schnell Gestrüpp, Rebholz, Maisstroh, Maisstengel, Gründüngung, Spargelkrautgemüserückstände usw.; des weiteren mähen sie alle Arten von Gräsern, vom Seegras über Schilf bis hin zu den Reetgräsern, sogar überjähriges Gras, sauber ab. Auch Dornengestrüpp sowie Holzaufschläge bis zu 5 cm Durchmesser sind für derartige Geräte kein Hindernis. Das stark zerkleinerte und gemulchte Mähgut wird gleichmäßig nach hinten abgelegt oder auch abgefördert und verrottet sehr schnell.

Bei einem bekannten, speziell zum Säubern von Fahrbahnrändern bestimmten Gerät der angegebenen Art (DE-PS 22 10 689) ist jedes Schlegelmesser jeweils mit einem U- oder haarnadelförmig umgebogenen Messerschaft versehen und hiermit in den Gelenkbolzen eingehängt, der jeweils zwischen zwei von der Rotorwelle radial abstehenden Wangen im Abstand und parallel zur Drehachse der Rotorwelle befestigt ist. Zur Begrenzung der Vorschwenkendstellung der Schlegelmesser in der Weise, daß ihre parallel zur Drehachse der Rotorwelle ausgerichteten Schneidkanten, bezogen auf die Drehrichtung der Rotorwelle, jeweils zurückversetzt hinter der die Achse der Rotorwelle mit der Achse des jeweiligen Gelenkbolzens verbindenden Ebene liegen, ist ein besonderer Anschlag in Form eines runden oder rechteckigen Bolzens vorgesehen, der sich ebenfalls zwischen den beiden den Gelenkbolzen tragenden Wangen erstreckt.

Der Vorteil einer solchen Begrenzung der Vorschwenkendstellung der Schlegelmesser ist vor allem darin zu sehen, daß die Messer in ihrer gegenüber der Drehrichtung der Rotorwelle etwas nacheilenden Endstellung beim Auftreffen auf abzumähendes bzw. abzufräsendes Gut eine kinetisch stabilere Lage einnehmen als bei einer Ausrichtung in die ungezwungene Fliehkraftstellung und dementsprechend auch bei niedrigen Drehzahlen der Rotorwelle (von z.B. 1500 U/min) eine hohe Schlagwirkung ausüben, dennoch aber leicht zurückschwenken können, wenn sie auf einen festen Widerstand, z.B. einen Stein od.dgl., treffen. Außerdem wird durch die die Schneidkanten der Schlegelmesser zurückversetzende Begrenzung der Vorschwenkendstellung ein geringerer Kraftbedarf für das Betreiben des Geräts erreicht, und zwar bei hoher Schneid- bzw. Schlagkraft der einzelnen Schlegelmesser. - Das in dieser Weise ausgestaltete vorbekannte Gerät ist jedoch insofern nachteilig, als es eine relativ große bzw. klobige und gewichtsmäßig schwere Bauweise erfordert. Dies wiederum macht es schwierig, ein derartiges Gerät so auszubilden, daß es auch an Kleinschleppern oder als Anbau-Arbeitskopf an einem schwenk- und knickbaren Auslegerarm Verwendung finden kann. Bisher läßt sich dies nur unter Verringerung der Arbeitsbreite des Geräts erreichen, weil nur so das Gewicht verringert werden kann; an der großvolumigen bzw. klobigen Bauweise des Geräts ändert sich dadurch allerdings nichts.

Die Erfindung hat sich daher die Aufgabe gestellt, ein Mähgerät der im Oberbegriff des Patentanspruchs 1 angegebenen Art so auszugestalten, daß eine wesentlich kleinere und leichtere Bauweise ermöglicht wird, um so die Anwendungs- und Ausgestaltungsmöglichkeiten des Geräts, insbesondere für den Einsatz an Kleinschleppern oder als Anbau-Arbeitskopf zu verbessern und zu vergrößern.

Hierzu zeichnet sich die Erfindung in erster Linie aus durch die im Kennzeichen des Patentanspruchs 1 angegebene Gestaltung. Weitere Merkmale und vorteilhafte Einzelheiten der Erfindung sind in den Ansprüchen 2 bis 7 angegeben.

Dadurch, daß bei dem erfindungsgemäßen Gerät kein besonderer, zwischen den Haltewangen angebrachter Anschlagbolzen zur Begrenzung der Vorschwenkendstellung der Schlegelmesser mehr benötigt wird, sondern diese Begrenzung jeweils durch das unmittelbare Zusammenwirken des Messerschaftes mit der Rotorwelle erfolgt, wird nicht nur das Gewicht des Anschlagbolzens selbst eingespart, sondern auch eine Verkürzung der Haltewangen und auch der Schlegelmesser selbst ermöglicht, so daß das Gerät insgesamt kleiner und leichter baut, ansonsten jedoch die gleichen Vorteile in bezug auf Arbeits- und Betriebsweise wie das bekannte Gerät besitzt. Bei gleicher Anzahl und Breite der auf der Rotorwelle befindlichen Schlegelmesser läßt sich auf diese Weise (Fortfall der Anschlagbolzen, Verkürzung der Haltewangen u. Verkürzung der Länge der Schlegelmesser) eine Gewichtsverringerung von etwa 1,8 kg pro Messeranbringung erreichen, was sich dahingehend auswirkt, daß beispielsweise bei einer Arbeitsbreite von 1,30 m das Gewicht nur noch 200 kg beträgt, gegenüber einem Gewicht von 220 kg bei einer Arbeitsbreite von 1,10 m für ein Gerät bisheriger Gestaltung. Überdies

läßt sich eine wesentlich kleinere und kompaktere Bauweise des gesamten Geräts, insbesondere hinsichtlich der Gestaltung der Schutz- und Leithaube, erreichen. - Durch die in den Ansprüchen 6 und 7 angegebene Gestaltung wird im übrigen eine wesentliche Verbesserung der Betriebssicherheit des Geräts herbeigeführt.

Der Gegenstand der Erfindung wird nachstehend anhand einer ein Ausführungsbeispiel veranschaulichenden Zeichnung näher erläutert; in der Zeichnung zeigen:

Fig. 1    einen Querschnitt durch eine Rotorwelle mit einer erfindungsgemäßen Schlegelmesser-Halterung,

Fig. 2    eine Teilansicht in Richtung des Pfeils X in Fig. 1 in verkleinertem Maßstab,

Fig. 3    einen Querschnitt wie Fig. 1 in vom Gelenkbolzen abgehobener Stellung des Schlegelmessers.

Die in bekannter Weise an ihrem Umfang mit einer Vielzahl von Schlegelmessern 1 bestückte Rotorwelle 2 wird für einen Umlauf in Richtung des Pfeils a angetrieben. Die Rotorwelle 2 mit den Schlegelmessern 1 bildet einen Schneidrotor, der in üblicher Weise mit waagerechter Drehachse 3 in einem eine Schutz- und Leithaube umfassenden Maschinengestell gelagert ist, das hier keiner näheren Veranschaulichung bedarf. Die Länge des um die waagerechte Drehachse 3 umlaufenden Schneidrotors bestimmt die Arbeitsbreite des Geräts. Die Schlegelmesser sind an der Rotorwelle 2 in mehreren parallelen Reihen versetzt zueinander angeordnet. In der Zeichnung ist aus Vereinfachungsgründen lediglich eines dieser Schlegelmesser 1 dargestellt.

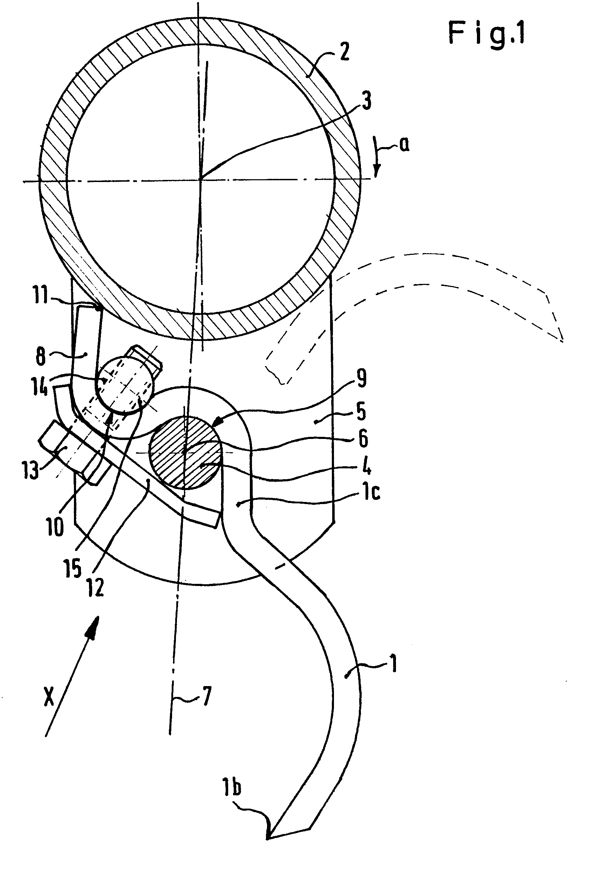

Jedes der Schlegelmesser 1 ist an der Rotorwelle 2 mittels zweier, zwischen sich einen parallel zur Drehachse 3 ausgerichteten Gelenkbolzen 4 tragenden und so einen Halte- bzw. Lagerbock ausbildender Haltewangen 5 begrenzt vor- und rückschwenkbar gelagert. In Fig. 1 der Zeichnung ist die mögliche Rückschwenkendstellung des Schlegelmessers 1 strichliniert ange-

deutet, während die Vorschwenkendstellung des Schlegelmessers 1 mit ausgezogenen Linien dargestellt ist; es ist ersichtlich, daß in der Vorschwenkendstellung die Schneidkante 1b des Schlegelmessers 1, bezogen auf die Drehrichtung a der Rotorwelle 2, jeweils zurückversetzt hinter einer die Achse 3 der Rotorwelle 2 mit der Mittelachse 6 des jeweiligen Gelenkbolzens 4 verbindenden Ebene 7 liegt.

Zur Begrenzung der Vorschwenkendstellung jedes Schlegelmessers 1 ist ein unmittelbares Zusammenwirken eines über den Gelenkbolzen 4 hinaus verlängerten Endes 8 des Messerschafts 1c mit der Rotorwelle 2 vorgesehen. Dazu ist der Messerschaft 1c unter Einschluß von zwei Ausbuchtungen 9,10 wellenförmig ausgebildet, wobei das mit der Rotorwelle 2 bei 11 in Wirkverbindung bringbare Ende 8 des Messerschaftes 1c von dem freien Wellungsendschenkel gebildet ist. Der wellenförmige Messerschaft 1c ist so gestaltet, daß er mit seiner ersten Ausbuchtung 9 den Gelenkbolzen 4 bereichsweise übergreift, wobei die den Gelenkbolzen 4 aufnehmende Ausbuchtung 9 von einer am Messerschaft lösbar befestigten Sicherungsplatte 12 überdeckt ist. Die Sicherungsplatte 12 ist am Messerschaft mit einer diesen durchdringenden Schraube 13 befestigt, deren Gewindende eine Querbohrung 14 eines in der zweiten Ausbuchtung 10 lose gelagerten Rundbolzens 15 durchsetzt, der für die Schraube 13 eine in der Ausbuchtung 10 verdrehsicher gehaltene Mutter bildet.

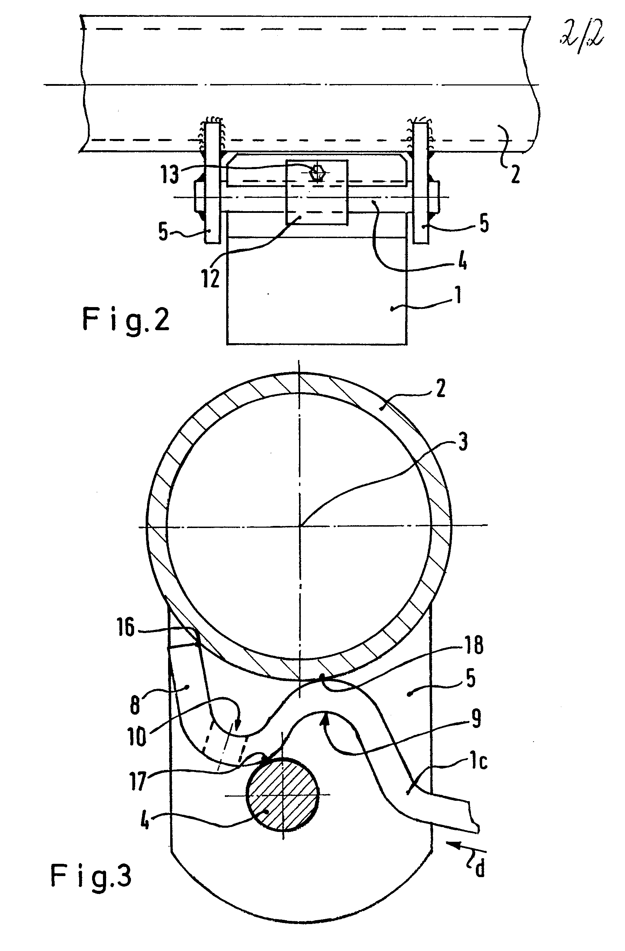

Die vorstehend beschriebene Gestaltung ermöglicht es nicht nur, die radiale Erstreckung der Haltewangen 5 und auch den Abstand des Gelenkbolzens 4 von der Rotorwelle 2 relativ klein zu halten, womit auch die Länge der Schlegelmesser 1 verringert werden kann, sondern ermöglicht darüber hinaus auch eine zusätzliche Sicherung des Schlegelmessers gegen ein Ablösen bzw. Entfernen vom Lagerbock in Richtung der Zentrifugalkraft nach außen hin. Wie aus Fig. 3 ersichtlich, läßt sich nämlich der wellenförmige Messerschaft 1c so gestalten und bemessen, daß er sich bei entfernter Sicherungsplatte 12 in jeder Stellung des Schlegelmessers zwischen Rotorwelle 2 und Gelenkbolzen 4 verkeilt und somit in dem Zwischenraum zwischen der Rotorwelle 2 und dem Gelenkbolzen 4 fixiert bleibt. Bei dem Versuch, das Schlegelmesser ohne die Sicherungsplatte aus dem Lagerbock in Zentrifugalrichtung nach außen von der Rotorwelle zu entfernen, bildet nämlich der wellenförmige Messerschaft drei Abstützungen 16,17 und 18 aus, die seine Verkeilung zwischen Rotorwelle 2 und Gelenkbolzen 4 bewirken und sicherstellen, daß ein Entfernen bzw. Ablösen des Schlegelmessers 1 vom Lagerbock nur nach innen, d.h. in Pfeilrichtung d, möglich ist. Auf diese Weise ist eine erhöhte Betriebssicherheit gewährleitet.

Der Gegenstand der Erfindung ist nicht auf das in der Zeichnung dargestellte und vorstehend beschriebene Ausführungsbeispiel beschränkt, wenngleich es sich hierbei um eine bevorzugte Ausführungsform handelt. Im Rahmen der Patentansprüche sind aber auch anderweitige Ausgestaltungen bzw. Modifizierungen denkbar und möglich. So könnte z.B. der Messerschaft im Anschluß an die erste Ausbuchtung 9 zur Lagerung am Gelenkbolzen 4 auch ein im Querschnitt ring- oder kreisförmig gestaltetes Endteil besitzen, dessen Außendurchmesser etwas größer ist als der Abstand zwischen Rotorwelle 2 und Gelenkbolzen 4, womit sich im wesentlichen der gleiche Effekt wie bei der dargestellten Ausführungsform erreichen läßt, da auch in diesem Fall die Begrenzung der Vorschwenkendstellung des Schlegelmessers jeweils durch ein unmittelbares Zusammenwirken eines über den Gelenkbolzen hinaus verlängerten Endes des Messerschafts mit der Rotorwelle erfolgt und überdies auch ein Entfernen des Schlegelmessers nach außen wirksam verhindert ist.

-.-.-.-.-.-.-.-.-.-.-

VB/St

Patentansprüche:

1.     Mähgerät, mit in einem eine Schutz- und Leithaube umfassenden Maschinengestell um eine waagerechte Achse drehenden Schneidrotor, der eine Anzahl von an einer Rotorwelle begrenzt vor- und rückschwenkbar gelagerten Schlegelmessern aufweist, die an der bodenseitig in Bewegungsrichtung des Geräts drehenden Rotorwelle jeweils einzeln an im Abstand und parallel zu deren Drehachse angeordneten Gelenkbolzen angebracht und mit ihren Schneidkanten parallel zur Drehachse der Rotorwelle ausgerichtet sind und die in ihrer Vorschwenkendstellung jeweils so begrenzt sind, daß ihre Schneidkanten, bezogen auf die Drehrichtung der Rotorwelle, jeweils zurückversetzt hinter der die Drehachse der Rotorwelle mit der Mittelachse des jeweiligen Gelenkbolzens verbindenden Ebene liegen, dadurch gekennzeichnet, daß die Begrenzung der Vorschwenkendstellung jedes Schlegelmessers (1) durch das unmittelbare Zusammenwirken eines über den Gelenkbolzen (4) hinaus verlängerten Endes (8) des Messerschaftes (1c) mit der Rotorwelle (2) erfolgt.

2.     Mähgerät nach Anspruch 1, dadurch gekennzeichnet, daß der Messerschaft (1c) unter Einschluß von zwei Ausbuchtungen (9,10) wellenförmig ausgebildet und das mit der Rotorwelle (2) in Wirkverbindung bringbare Ende (8) des Messerschaftes von dem freien Wellungsendschenkel gebildet ist.

3.     Mähgerät nach Anspruch 1 oder 2, dadurch gekennzeichnet, daß der wellenförmige Messerschaft (1c) mit seiner ersten

- 8 -

Ausbuchtung (9) den Gelenkbolzen (4) bereichsweise übergreift und die den Gelenkbolzen aufnehmende Ausbuchtung von einem am Messerschaft lösbar befestigten Sicherungselement (12) überdeckt ist.

4.    Mähgerät nach Anspruch 3, dadurch gekennzeichnet, daß das Sicherungselement (12) am Messerschaft mit einem den Messerschaft (1c) durchdringenden und in der zweiten Ausbuchtung (10) gehalterten Befestigungsglied (13) befestigt ist.

5.    Mähgerät nach Anspruch 3 und 4, dadurch gekennzeichnet, daß das Sicherungselement (12) aus einer Platte und das Befestigungsglied (13) aus einer Schraube besteht, die in einem in der zweiten Ausbuchtung (10) gelagerten und mit einer Gewinde-Querbohrung (14) versehenen Rundbolzen (15) eingeschraubt ist.

6.    Mähgerät nach einem oder mehreren der Ansprüche 3 bis 5, dadurch gekennzeichnet, daß der Messerschaft (1c) so gestaltet und bemessen ist, daß er sich bei entferntem Sicherungselement (12) in jeder Stellung des Schlegelmessers (1) zwischen Rotorwelle (2) und Gelenkbolzen (4) verkeilt und so das Schlegelmesser gegen ein Ablösen bzw. Entfernen nach außen hin gesichert ist.

7.    Mähgerät nach Anspruch 6, dadurch gekennzeichnet, daß der Messerschaft (1c) drei Abstützungen (16,17,18) ausbildet, die seine Verkeilung zwischen Rotorwelle (2) und Gelenkbolzen (4) bewirken.

0182122

1/2

Fig.1

0182122

2/2

13

5

12

5

4

1

**Fig.2**

2

3

16

18

5

8

10

9

17

1c

4

d

**Fig.3**

Europäisches
Patentamt

**EUROPÄISCHER RECHERCHENBERICHT**

Nummer der Anmeldung

## EINSCHLÄGIGE DOKUMENTE

EP 85113351.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US - A - 2 777 268 (A.E.BREED) <br> * Fig. 1 * <br> -- | 1 | A 01 D 50/02 <br> A 01 D 43/08 <br> A 01 D 34/86 |
| A | GB - A - 1 095 507 (S.G.WOOFFITT, W.S.DESMOND) <br> * Anspruch 1,2; Fig. 1,4,6 * <br> -- | 1 | |
| A | GB - A - 1 162 006 (C. VAN DER LELY) <br> * Fig. 3,5 * <br> -- | 1 | |
| A | FR - A - 1 458 355 (N.V.HOLANDA) <br> * Fig. 1 * <br> -- | 1 | |
| A | GB - A - 1 256 554 (BLACKSTONE A. COMPANY) <br> ---- | | RECHERCHIERTE SACHGEBIETE (Int. Cl. 4) <br><br> A 01 D 50/00 <br> A 01 D 43/00 <br> A 01 D 34/00 |

Der vorliegende Recherchenbericht wurde für alle Patentansprüche erstellt.

| Recherchenort | Abschlußdatum der Recherche | Prüfer |
|---|---|---|
| WIEN | 18-02-1986 | MENTLER |